# FASCICULE DE BREVET EUROPEEN

(11) **EP 0 816 067 B1**
(45) Date de publication et mention de la délivrance du brevet: **16.04.2003**
(21) Numéro de dépôt: 97401478.9
(22) Date de dépôt: 25.06.1997
(51) Int. Cl.: B32B 27/08

(54) **Structure multicouche comprenant un liant et une couche de polycetone**
Mehrschichtige Struktur enthaltend einen Binder und eine Polyketonschicht
Multilayer structure comprising a binder and a polyketone layer

(30) Priorité: 05.07.1996 FR 9608418
(43) Date de publication de la demande: 07.01.1998
(73) Titulaire: Atofina, 92800 Puteaux (FR)
(72) Inventeur: Robert, Patrice, 27170 Beaumont le Roger (FR); Le Roy, Christophe, 27000 Evreux (FR)
(74) Mandataire: Neel, Henry

(56) Documents cités:
- EP-A- 0 171 626
- EP-A- 0 569 101
- EP-A- 0 597 275
- US-A- 5 393 818
- US-A- 5 405 700
- DATABASE WPI Section Ch, Week 9328 Derwent Publications Ltd., London, GB; Class A17, AN 93-223935 XP002042843 & JP 05 147 178 A (SUMITOMO ELECTRIC CO) , 15 juin 1993
- DATABASE WPI Section Ch, Week 9104 Derwent Publications Ltd., London, GB; Class A32, AN 91-025936 XP002042844 & JP 02 295 724 A (RIKEN VINYL KOGYO K) , 6 décembre 1990

## Description

La présente invention concerne une structure multicouche comprenant une couche d'un liant et directement attachée à celle-ci une couche de polycétone. Le liant est soit un polymère à fonctions hydroxyles soit un polymère à fonctions époxydes soit un copolymère de l'éthylène et d'un (méth)acrylate d'alkyle. Elle concerne aussi la structure précédente et directement attachée à celle-ci du côté du liant une couche (F) d'un polymère thermoplastique, tel que le polyéthylène ou d'un caoutchouc, ou bien une couche métallique.

Ainsi, l'invention fournit un liant pour faire adhérer entre elles une couche de polycétone et soit une couche métallique soit une couche d'un polymère thermoplastique ou d'un caoutchouc. Les structures de l'invention sont utiles pour fabriquer des emballages souples ou rigides tels que des sachets ou des bouteilles, ou pour fabriquer des tuyaux. Ces produits peuvent être fabriqués par coextrusion, laminage ou coextrusion soufflage. Les polycétones sont des copolymères linéaires alternés d'oxyde de carbone et d'au moins un monomère insaturé.

La demande WO 95/09212 décrit des structures multicouches constituées d'une couche de polycétone et d'une couche de polyoléfine, le liant disposé entre ces deux couches est le produit de réaction d'une polyoléfine greffée par de l'anhydride maléique et d'une diamine.

Le brevet US 5 369 170 décrit un liant similaire. La fabrication des liants de l'art antérieur peut conduire à une réticulation ce qui complique leur utilisation en particulier l'indice de fluidité ou Melt index (MFI) peut être tel qu'on ne puisse plus coextruder.

Le liant de la présente invention est beaucoup plus simple, il peut être :
- soit un polymère thermoplastique contenant au moins une fonction hydroxyle pouvant être un polymère ayant une fonction hydroxyle, un mélange de polymères ayant chacun au moins une fonction hydroxyle ou un mélange d'un polymère ayant au moins une fonction hydroxyle avec un autre polymère;
- soit un polymère thermoplastique contenant au moins une fonction époxyde pouvant être un polymère ayant une fonction époxyde, un mélange de polymères ayant chacun au moins une fonction époxyde ou un mélange d'un polymère ayant au moins une fonction époxyde avec un autre polymère;
- soit un polymère thermoplastique comprenant des motifs éthylène et au moins un motif (méth)acrylate d'alkyle.

S'agissant du liant à fonction hydroxyle, la fonction hydroxyle est intégrée au polymère soit par polymérisation ou par greffage d'un ou de plusieurs monomères appropriés, soit par modification chimique d'une fonction appropriée déjà présente dans le polymère, soit par réaction du polymère qu'on a fonctionnalisé ou d'un polymère fonctionnalisé avec un produit apportant au moins une fonction hydroxyle.

Les différentes réactions (polymérisation, greffage ou modification) sont faites selon les règles de l'art à l'état solide, fondu ou en solution.

La fonction hydroxyle est généralement apportée soit par des monomères acryliques fonctionnels comme par exemple le HEA ou le HEMA (acrylate ou méthacrylate d'hydroxyéthyle), soit par des alcools portant une fonction polymérisable ou greffable (par exemple vinylique) ou encore par le vinylphénol. Ces monomères peuvent également porter d'autres fonctionnalités peu ou pas réactives avec les fonctions hydroxyles comme une fonction amide ou amine.

La fonction hydroxyle peut également être obtenue à partir d'une fonction appropriée déjà présente dans le polymère par l'intermédiaire d'une réaction appropriée comme par exemple l'hydrolyse catalysée d'une fonction ester d'acrylate de vinyle.

D'autres monomères peuvent également être présents dans le polymère comme une ou plusieurs oléfines (éthylène, propylène, butène, héxène, octène, méthyl-4 pentène ou vinylnorbomène), un acrylate ou un méthacrylate d'alkyle, un alkyle de vinyle. Ces monomères peuvent être conjointement présents.

Les produits obtenus peuvent être utilisés seuls ou en mélange avec des polymères contenant ou ne contenant pas eux-mêmes de fonctions hydroxyles. L'emploi d'un additif ou d'un autre polymère peut être nécessaire dans le cas des mélanges pour assurer un bon mélangeage et une bonne compatibilisation des polymères.

On peut aussi partir d'un polymère portant une fonction acide carboxylique ou anhydride d'acide carboxylique, cette fonction ayant été apportée par exemple par copolymérisation ou par greffage, neutraliser cette fonction par un diol tel que l'éthylène glycol, par un polyétherdiol tel que le polyéthylène glycol, le polypropylène glycol ou le polytétraméthylène glycol.

Avantageusement, les polymères sur lesquels on apporte la fonction hydroxyle par greffage sont des polyoléfines. Les monomères qu'on polymérise avec des monomères apportant une fonction hydroxyle ou une fonction pouvant être transformée en fonction hydroxyle sont avantageusement des oléfines. Les polymères portant des fonctions acide carboxylique ou anhydride d'acide carboxylique sont aussi avantageusement des polyoléfines.

On entend par polyoléfines :
- les homopolymères de l'éthylène, ou du propylène ;
- les copolymères de l'éthylène et de l'acétate de vinyle ;
- les copolymères de l'éthylène et d'au moins un (méth)acrylate d'alkyle. Le groupement alkyle du (méth)acrylate d'alkyle a jusqu'à 10 atomes de carbone et peut être linéaire, ramifié ou cyclique. A titre d'illustration du (méth)acrylate d'alkyle, on peut citer notamment l'acrylate de n-butyle, l'acrylate de méthyle, l'acrylate d'isobutyle, l'acrylate d'éthyl-2-hexyle, l'acrylate de cyclohexyle, le méthacrylate de méthyle, le méthacrylate d'éthyle. Parmi ces (méth)acrylates, on préfère l'acrylate d'éthyle, l'acrylate de méthyle, l'acrylate de n-butyle et le méthacrylate de méthyle.
- les copolymères de l'éthylène et du butène ou de l'éthylène et de l'héxène.
- les polyalphaoléfines amorphes (APAO). De préférence, on utilise les APAO dérivées de l'éthylène, du propylène, du butène ou de l'héxène. On utilise avantageusement soit des copolymères éthylène/propylène/butène à haute teneur en butène, soit des copolymères éthylène/propylène/butène à haute teneur en propylène soit des homo ou copolymères du butène.

On utilise avantageusement des copolymères éthylène / (méth)acrylate d'alkyle.

Ainsi le liant à fonction hydroxyle peut être par exemple un copolymère éthylène / (méth)acrylate d'alkyle / (méth)acrylate d'hydroxyéthyle, un copolymère éthylène / acétate de vinyle / (méth)acrylate d'hydroxyéthyle ou des copolymères éthylène / (méth)acrylate d'alkyle ou éthylène / acétate de vinyle greffés par le (méth)acrylate d'hydroxyéthyle.

Les polyacrylates ou polyméthacrylates d'hydroxyéthyle ne sont pas toujours thermoplastiques. Il est donc avantageux de les mélanger avec d'autres polymères pour que la résine ait un caractère thermoplastique. La résine étant thermoplastique peut être facilement transformée en film pour être par exemple coextrudée.

On peut aussi, même si le polymère ayant au moins une fonction hydroxyle est thermoplastique, le mélanger avec d'autres polymères thermoplastiques.

A titre d'exemples de polymères pouvant être mélangés avec les polymères ayant une fonction hydroxyle, on peut citer :
- le polyéthylène, le polypropylène ;
- les copolymères de l'éthylène avec au moins un produit choisi parmi (i) les sels et les esters d'acides carboxyliques insaturés, (ii) les esters vinyliques d'acides carboxyliques saturés, (iii) les alpha-oléfines, les monomères (i) à (iii) pouvant être greffés ou copolymérisés ;
- les copolymères blocs styrène / éthylène-butène / styrène (SEBS) ;
- les copolymères blocs styrène / butadiène / styrène (SBS) ;
- les copolymères blocs styrène / isoprène / styrène (SIS).

La composition des mélanges, la teneur en comonomère, la quantité de fonctions hydroxyles et la structure des polymères est optimisée au regard des propriétés d'adhésion et de mise en oeuvre souhaitées.

Il peut être nécessaire d'ajouter dans la résine des agents compatilibilisants pour favoriser l'homogénéité de la résine. Ces produits sont connus en soi, ce sont par exemple des polyoléfines fonctionnalisées telles que les copolymères de l'éthylène avec au moins un produit choisi parmi (i) les acides carboxyliques insaturés, leurs sels, leurs esters, (ii) les acides dicarboxyliques insaturés, leurs sels, leurs esters, leurs hémiesters, leurs anhydrides, (iii) les esters vinyliques d'acide carboxyliques saturés, (iv) les alpha-oléfines, les monomères (i) à (iv) pouvant être greffés ou copolymérisés.

A titre d'exemple de résines thermoplastiques contenant au moins une fonction hydroxyle, on peut citer :
1) - les mélanges :
   ■ de copolymères éthylène / alcool vinylique (EVOH) ou de poly(méth)acrylate d'hydroxyéthyle ;
      et d'au moins un produit choisi parmi :
   ■ les copolymères de l'éthylène avec au moins un produit choisi parmi (i) les acides carboxyliques insaturés, leurs sels, leurs esters, (ii) les acides dicarboxyliques insaturés, leurs sels, leurs esters, leurs hémiesters, leurs anhydrides, (iii) les esters vinyliques d'acide carboxyliques saturés, les monomères (i) à (iii) pouvant être greffés ou copolymérisés ;
   ■ les polyéthylènes, les copolymères d'éthylène et d'alpha-oléfines.
2)- les mélanges de :
   ■ polyéthylène ou de copolymère de l'éthylène avec des esters d'acides carboxyliques insaturés ou de copolymères de l'éthylène avec des esters vinyliques d'acides carboxyliques saturés ; et
   ■ de polyéthylène ou copolymères de l'éthylène et d'alpha-oléfines. Ces polymères étant l'un ou l'autre ou les deux séparément ou simultanément greffés avec du (méth)acrylate d'hydroxyéthyle.
3)- les copolymères éthylène / acétate de vinyle en partie ou en totalité hydrolysés, ces copolymères pouvant aussi contenir des unités copolymérisées de (méth)acrylate d'alkyle.

On utilise avantageusement les résines suivantes :
4)- les mélanges de :
   ■ copolymères éthylène / (méth)acrylate d'alkyle ;
   ■ EVOH
   ■ copolymères éthylène / (méth)acrylate d'alkyle / anhydride maléique ou (méth)acrylate de glycidyle.
5)- les mélanges de :
   ■ copolymères éthylène / (méth)acrylate d'alkyle ;
   ■ EVOH
   ■ polyéthylène linéaire basse densité greffé par l'anhydride maléique
   ■ élastomère EPR (éthylène propylène).
6)- les mélanges de :
   ■ copolymères éthylène / (méth)acrylate d'alkyle ;
   ■ poly(méth)acrylate d'hydroxyéthyle.
7)- les mélanges de :
   ■ copolymères éthylène / (méth)acrylate d'alkyle ;
   ■ copolymère éthylène / alpha-oléfines ; ces copolymères étant l'un ou l'autre ou les deux séparément ou simultanément greffés par du (méth)acrylate d'hydroxyéthyle.
8)- les copolymères éthylène / acétate de vinyle / alcool vinylique /(méth)acrylate d'alkyle.

A titre d'exemple, l'épaisseur de ce film de liant peut être comprise entre 5 et 50 µm.

On peut procéder au greffage à l'état fondu des polyoléfines en présence d'initiateur(s) radicalaire(s).

La réaction de greffage est mise en oeuvre dans une extrudeuse mono ou double vis alimentée par des polyoléfines dans une trémie d'alimentation, par exemple sous forme de granulés ; dans une première zone de l'extrudeuse, on procède à la fusion des polyoléfines par chauffage et dans une seconde zone, on introduit les réactifs au sein de la masse fondue des polyoléfines.

Les initiateurs radicalaires peuvent être choisis parmi les peroxydes, peracides, peresters, peracétals. On les utilise en général à raison de 0,01 % à 0,5 % en masse par rapport aux polyoléfines à greffer.

A titre d'exemple, on peut citer :
- le peroxyde de dicumyle (DICUP),
- le 2,5-diméthyl-2,5-ditertiobutylperoxyhexane (DHBP)
- l'α,α'-(ditertiobutylperoxyisopropyl)-benzène (Y1490).

On préfère dissoudre l'initiateur radicalaire dans le monomère de greffage à l'état liquide avant de l'introduire, par exemple au moyen d'une pompe doseuse, dans les polyoléfines à l'état fondu.

On préfère que la zone d'introduction des réactifs soit suffisamment longue et à une température suffisamment basse pour assurer une bonne dispersion des réactifs et une décomposition thermique de l'initiateur radicalaire la plus faible possible.

La réaction de greffage proprement dite a lieu dans une troisième zone de l'extrudeuse à une température apte à assurer la décomposition totale de l'initiateur radicalaire ; avant la sortie de la masse fondue en tête d'extrudeuse, une zone de dégazage est prévue où les produits de décomposition de l'initiateur et le monomère de greffage qui n'a pas réagi sont dégazés par exemple sous vide.

On récupère les polyoléfines greffées en sortie d'extrudeuse par exemple sous forme de joncs granulés après refroidissement sous air froid.

Le rapport pondéral des greffons au polymère greffé est en général compris entre 0,1 et 5 % et de préférence 0,15 à 2,5 %.

Quant au liant à fonction époxyde, on peut introduire cette fonction par greffage ou copolymérisation. S'agissant du greffage, on peut l'effectuer sur tout polymère thermoplastique mais avantageusement sur des polyoléfines. On peut utiliser les polyoléfines déjà citées plus haut pour le greffage de la fonction hydroxyle.

On utilise avantageusement les copolymères éthylène / (méth)acrylate d'alkyle.

A titre d'exemple d'époxydes insaturés, on peut citer notamment les esters et les éthers de glycidyle tels l'itaconate de glycidyle, le vinylglycidyléther, l'allylglycidyléther et le vinylcyclohexènemonoxide.

On peut citer aussi les esters et les éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo (2,2,1)-5-heptène-2,3 diglycidyl dicarboxylate.

Parmi ces époxydes insaturés, on préfère tout particulièrement l'acrylate et le méthacrylate de glycidyle.

Pour greffer les époxydes insaturés sur les polyoléfines, on peut utiliser le même procédé que pour greffer les monomères à fonction hydroxyle.

Quant aux copolymères ayant des fonctions époxyde, il s'agit de copolymères d'époxydes insaturés. Avantageusement, les comonomères sont choisis parmi les oléfines, les (méth)acrylates d'alkyle et les esters vinyliques d'acides carboxyliques saturés.

Avantageusement, le liant comprenant des fonctions époxydes est un copolymère de l'éthylène et d'au moins un époxyde insaturé.

Pour ces copolymères de l'éthylène et d'au moins un époxyde insaturé, on peut choisir l'époxyde parmi la même famille que ceux déjà cités pour les liants (cas des polyoléfines greffées avec des époxydes insaturés). Ce copolymère de l'éthylène et d'au moins un époxyde insaturé peut aussi comprendre des unités copolymérisées de (méth)acrylate d'alkyle ou d'acétate de vinyle. Le (méth) acrylate d'alkyle peut être choisi dans la même famille que citée plus haut pour les comonomères éventuels des polyoléfines greffées avec des monomères à fonction hydroxyle. A titre d'exemple de copolymères de l'éthylène et d'au moins un époxyde insaturé, on peut citer les copolymères de l'éthylène, d'un (méth)acrylate d'alkyle et de méthacrylate de glycidyle contenant 2 à 10 %, de préférence 6 à 8 % en poids de méthacrylate de glycidyle et au moins 50 % d'éthylène.

S'agissant du polymère thermoplastique comprenant des motifs éthylène et au moins un motif (méth)acrylate d'alkyle on peut citer les copolymères éthylène-(méth)acrylate d'alkyle qu'on a cités plus haut en décrivant les polyoléfines en général. Avantageusement on utilise les copolymères comprenant 20 à 40 % et de préférence 25 à 38 % en poids de (méth)acrylate. Leur indice de fluidité (MFI) peut être par exemple compris entre 1 et 500.

Ces copolymères peuvent être utilisés en mélange avec des polyéthylènes homopolymères, des copolymères de l'éthylène et d'au moins une alpha-oléfine, des polyalpha-oléfines amorphes, des copolymères de l'éthylène et de l'acétate de vinyle, des copolymères blocs SEBS, SBS ou SIS.

On ne sortirait pas du cadre de l'invention en utilisant des mélanges d'au moins deux des liants de la présente invention.

Les polycétones sont des polymères comprenant substantiellement une mole d'oxyde de carbone pour chaque mole de monomère insaturé. Ce monomère peut être choisi parmi les alpha-oléfines ayant de 2 à 12 atomes de carbone ou leurs dérivés de substitution. Il peut aussi être choisi parmi le styrène ou ses dérivés obtenus par substitution avec des alkyles tels que les méthylstyrènes, éthylstyrène et isopropylstyrène.

De préférence, les polycétones sont des copolymères de l'éthylène et de l'oxyde de carbone ou des copolymères de l'éthylène, propylène et de l'oxyde de carbone.

Quand les polycétones sont des copolymères de l'éthylène, d'un deuxième monomère et de l'oxyde de carbone, il y a au moins deux motifs éthylène pour un motif du deuxième monomère et de préférence 10 à 100.

Les polycétones peuvent être représentées par la formule :

―(―CO―CH₂―CH₂―)ₓ―(―CO―A―)_{y}―

dans laquelle A désigne un monomère insaturé ayant au moins 3 atomes de carbone, le rapport x/y étant au moins 2.

Les motifs ―(―CO―CH₂―CH₂―) et ―(―CO―A―)― sont répartis au hasard dans la chaîne de polycétone.

Les masses molaires en nombre peuvent être comprises entre 1 000 et 200 000 avantageusement entre 20 000 et 90 000 (mesurées par chromatographie à perméation de gel). Les températures de fusion peuvent être comprises entre 175 et 300° C, le plus souvent entre 200 et 270° C.

Des synthèses de ces polycétones sont décrites dans les brevets US 4 843 144, et US 4 880 903 et US 3 694 412.

L'épaisseur de la couche de polycétone peut être quelconque.

Le thermoplastique de la couche (F) peut être une polyoléfine, en particulier celles qu'on a définies plus haut, un polyamide, un polymère fluoré, un polyester tel que le PET ou le PBT.

(F) peut être aussi un caoutchouc tel que par exemple un EPDM (éthylène-propylène-diène), NBR (nitrile-butadiène), HNBR (nitrile-butadiène hydrogéné).

L'invention est particulièrement utile pour les couches (F) en polyéthylène ou en polypropylène (homo ou copolymères).

La couche de polyoléfine est par exemple un film de polyéthylène, de polypropylène ou de copolymère de l'éthylène tel que éthylène/propylène, éthylène/butène, éthylène/hexène, éthylène/octène, ou éthylène/propylène/butène ou de copolymères de l'éthylène avec au moins un produit choisi parmi les esters vinyliques d'acides carboxyliques saturés, les esters et les sels d'acides carboxyliques insaturés. Cette couche peut comprendre en plus de la polyoléfine un autre polymère, éventuellement un agent compatibilisant. Elle peut comprendre également un mélange de polyoléfines.

La couche métallique peut être par exemple une pellicule ou une feuille d'un métal tel que l'aluminium, le fer, le cuivre, l'étain et le nickel ou un alliage contenant comme constituant principal au moins deux de ces métaux. L'épaisseur de la pellicule ou de la feuille peut être d'environ 0,01 à 0,2 mm. Il est de pratique courante de dégraisser la surface de la couche métallique avant de laminer sur elle le liant de l'invention.

Les liants de l'invention, la polycétone, les polymères thermoplastiques et les caoutchoucs de la couche (F) peuvent contenir des additifs habituels tels que plastifiants, anti-oxydants, anti U.V.

Les structures de l'invention sont fabriquées selon les techniques habituelles de lamination, coextrusion, extrusion lamination, couchage.

Les structures de l'invention peuvent aussi comprendre d'autres couches, par exemple on peut appliquer une autre couche de liant de l'invention sur la polycétone et ensuite une autre couche (F) pour former des structures :
(F) / liant de l'invention / polycétone / liant de l'invention / (F)

### Exemples

Les produits utilisés sont les suivants :
- EPCO : copolymère alterné oléfine - monoxyde de carbone ayant une température de fusion égale à 204° C et un indice de fluidité mesuré à 240° C sous une charge de 5 kg égal à 44 g/10 min.
- LOTADER 1 : copolymère éthylène - acrylate d'éthyle - méthacrylate de glycidyle de proportion en poids 66,9 / 25,5 / 7,6 et MFI 6 (190° C - 2,16 kg).
- LOTADER 2 : copolymère éthylène - acrylate d'éthyle - méthacrylate de glycidyle de proportion en poids 71 / 27 / 2 et MFI 6.
- LOTADER 3 : copolymère éthylène - acrylate d'éthyle - anhydride maléique de proportion en poids 91,5 / 5 / 3,5 et MFI 5
- LOTRYL 1 : copolymère éthylène - acrylate de méthyle à 29 % poids d'acrylate et MFI 3
- LOTRYL 2 : copolymère éthylène - acrylate de butyle à 35 % en poids d'acrylate et MFI 40
- LOTRYL 3 : copolymère éthylène - acrylate de butyle à 35 % en poids d'acrylate et MFI 320
- OREVAC 1 : polypropylène greffé anhydride maléique (MAH) et comprenant 1 % de MAH.
- OREVAC 2 : polyéthylène greffé anhydride maléique MFI 1 et 0,4 % de MAH.

Des films de 50 µm de EPCO (polycétone) ont été préparés.

Les différents produits ont été thermoscellés sur les films précédents dans les assemblages suivants :
EPCO (50 µm) / liant (200 µm) / EPCO (50 µm)

Les thermoscellages ont été effectués à 220° C, pendant 1 min, avec une pression hydraulique de 350 bars.

L'adhérence entre le film de liant et le film de EPCO a été mesurée par pelage en T à la vitesse de 200 mm/min.

On a obtenu les forces de pelage suivantes :

| **PRODUIT** | **FORCE DE PELAGE N/15 mm** |
|---|---|
| LOTADER 1 | indélaminable |
| LOTADER 2 | indélaminable |
| LOTADER 3 | 1 |
| LOTRYL 1 | indélaminable |
| LOTRYL 1 greffé par 12 % d'acrylate d'hydroxyéthyle | indélaminable |
| LOTRYL 2 | 2 |
| LOTRYL 2 greffé par 1,8 % d'acrylate d'hydroxyéthyle | 17 |
| LOTRYL 3 | 5,2 |
| LOTRYL 3 greffé par 3 % d'acrylate d'hydroxyéthyle | 7 |
| OREVAC 1 | 0.1 |
| OREVAC 2 | 1 |

## Revendications

1. Structure multicouche comprenant :
■ une couche d'un liant choisi parmi :
- les polymères thermoplastiques contenant au moins une fonction hydroxyle, cette fonction étant apportée par greffage sur des polyoléfines ou par polymérisation d'oléfines avec des monomères portant une fonction hydroxyle ou une fonction pouvant être transformée en fonction hydroxyle;
- les polymères thermoplastiques contenant au moins une fonction époxyde, cette fonction étant apportée par greffage sur tout polymère thermoplastique mais avantageusement sur des polyoléfines ou par copolymérisation de l'éthylène et d'au moins un époxyde insaturé; et
- les polymères thermoplastiques comprenant des motifs éthylène et au moins un motif (méth)acrylate d'alkyle,
■ et directement attachée à celle-ci une couche de polycétone composée d'un copolymère linéaire alterné d'oxyde de carbone et d'au moins un monomère insaturé choisi parmi :
- les alpha-oléfines ayant de 2 à 12 atomes de carbone ; et
- le styrène et ses dérivés obtenus par substitution avec des radicaux alkyles.

2. Structure selon la revendication 1 **caractérisée en ce que** les polyoléfines sont choisies dans le groupe :
- des polyoléfines portant des fonctions acide carboxylique ou anhydride d'acide carboxylique ;
- des homopolymères de l'éthylène ou du propylène ;
- des copolymères de l'éthylène et de l'acétate de vinyle ;
- des copolymères de l'éthylène et d'au moins un (méth)acrylate d'alkyle ;
- des copolymères de l'éthylène et du butène ou de l'éthylène et de l'héxène ;
- les polyalphaoléfines amorphes (APAO).

3. Structure selon la revendication 1 ou 2 dans laquelle est directement attachée du côté du liant une couche (F) d'un polymère thermoplastique, d'un caoutchouc ou bien une couche métallique.

4. Structure selon l'une des revendications 1 à 3 dans laquelle le liant est une polyoléfine greffée par un monomère insaturé ayant au moins une fonction hydroxyle.

5. Structure selon la revendication 4 dans laquelle le liant est un copolymère éthylène-(méth)acrylate d'alkyle greffé par le (méth)acrylate d'hydroxyéthyle.

6. Structure selon l'une des revendications 1 à 3 dans laquelle le liant est un copolymère éthylène-(méth)acrylate d'alkyle - (méth)acrylate de glycidyle.

7. Structure selon l'une quelconque des revendications précédentes dans laquelle la couche (F) est un polyéthylène homo ou copolymère.

## Claims

1. Multilayer structure comprising:
■ a layer of a binder chosen from:
- thermoplastic polymers containing at least one hydroxyl function, this function being provided by grafting onto polyolefins or by polymerization of olefins with monomers bearing a hydroxyl function or a function that may be converted into a hydroxyl function;
- thermoplastic polymers containing at least one epoxide function, this function being provided by grafting onto any thermoplastic polymer, but advantageously onto polyolefins or by copolymerization of ethylene and of at least one unsaturated epoxide; and
- thermoplastic polymers comprising ethylene units and at least one alkyl (meth)acrylate unit,
■ and directly attached thereto a layer of polyketone composed of an alternating linear copolymer of carbon oxide and of at least one unsaturated monomer chosen from:
- α-olefins containing from 2 to 12 carbon atoms; and
- styrene and its derivatives obtained by substitution with alkyl radicals.

2. Structure according to Claim 1, **characterized in that** the polyolefins are chosen from the group of:
- polyolefins bearing carboxylic acid or carboxylic acid anhydride functions;
- homopolymers of ethylene or of propylene;
- copolymers of ethylene and of vinyl acetate;
- copolymers of ethylene and of at least one alkyl (meth)acrylate;
- copolymers of ethylene and of butene or of ethylene and of hexene;
- amorphous poly-α-olefins (APAO).

3. Structure according to Claim 1 or 2, in which a layer (F) of a thermoplastic polymer, of a rubber or alternatively a metal layer is directly attached on the binder side.

4. Structure according to one of Claims 1 to 3, in which the binder is a polyolefin grafted with an unsaturated monomer having at least one hydroxyl function.

5. Structure according to Claim 4, in which the binder is an ethylene/alkyl (meth)acrylate copolymer grafted with hydroxyethyl (meth)acrylate.

6. Structure according to one of Claims 1 to 3, in which the binder is an ethylene/alkyl (meth)acrylate/glycidyl (meth)acrylate copolymer.

7. Structure according to any one of the preceding claims, in which the layer (F) is a polyethylene homo- or copolymer.

## Patentansprüche

1. Mehrschichtige Struktur, umfassend:
• eine Schicht eines Bindemittels, ausgewählt aus:
- thermoplastischen Polymeren, enthaltend mindestens eine Hydroxylfunktion, wobei diese Funktion durch Pfropfung auf Polyolefine oder durch Polymerisation von Olefinen mit Monomeren mit einer Hydroxylfunktion oder einer Funktion, die in eine Hydroxylfunktion umgewandelt werden kann, bereitgestellt wird;
- thermoplastischen Polymeren, enthaltend mindestens eine Epoxidfunktion, wobei diese Funktion durch Pfropfung auf ein thermoplastisches Polymer, jedoch vorzugsweise über Polyolefine oder durch Copolymerisation von Ethylen mit mindestens einem ungesättigten Epoxid bereitgestellt wird; und
- thermoplastischen Polymeren, umfassend Ethyleneinheiten und mindestens eine Alkyl(meth-)acrylateinheit,
• und direkt mit der Bindemittelschicht verbunden eine Polyketonschicht, die aus einem linearen Copolymer besteht, das abwechselnd aus Kohlenmonoxid und mindestens einem ungesättigten Monomer besteht, das ausgewählt ist:
- α-Olefinen mit 2 bis 12 Kohlenstoffatomen; und
- Styrol und seinen durch Substitution mit Alkylresten erhaltenen Derivaten.

2. Struktur nach Anspruch 1, **dadurch gekennzeichnet, daß** die Polyolefine ausgewählt sind aus der Gruppe von:
- Polylefinen mit Carbonsäure- oder Carbonsäureanhydridfunktionen;
- Ethylen- oder Propylenhomopolymeren;
- Ethylen / Vinylacetat-Copolymeren;
- Copolymeren aus Ethylen und mindestens einem Alkyl(meth-)acrylat;
- Ethylen / Buten- oder Ethylen / Hexen-Copolymeren;
- amorphen Poly-α-olefinen (APAO).

3. Struktur nach Anspruch 1 oder 2, wobei eine Schicht (F) aus einem thermoplastischen Polymer oder einem Kautschuk oder aber eine Metallschicht direkt über die Seite des Bindemittels angebunden oder befestigt ist.

4. Struktur nach einem der Ansprüche 1 bis 3, wobei das Bindemittel ein Polyolefin ist, das mit einem ungesättigten Monomer mit mindestens einer Hydroxylfunktion gepfropft ist.

5. Struktur nach Anspruch 4, wobei das Bindemittel ein Ethylen / Alkyl(meth-)acrylat-Copolymer ist, das mit Hydroxyethyl(meth-)acrylat gepfropft ist.

6. Struktur nach einem der Ansprüche 1 bis 3, wobei das Bindemittel ein Ethylen / Alkyl(meth-)acrylat / Glycidyl(meth-)acrylat-Copolymer ist.

7. Struktur nach einem der vorhergehenden Ansprüche, wobei die Schicht (F) ein Polyethylenhomo- oder -copolymer ist.
